# EUROPEAN PATENT APPLICATION

(11) **EP 2 083 521 A2**
(43) Date of publication of application: **29.07.2009**
(21) Application number: 08105205.2
(22) Date of filing: 02.09.2008
(51) Int. Cl.: H04B 7/185

(54) **Satellite terminal control method and satellite network using such method**

(30) Priority: 28.01.2008 IT BS20080013
(71) Applicant: Selex Communications S.P.A., 16151 Genova (IT)
(72) Inventor: Santo, Luciano, 96010 Sortino, Siracusa (IT); Catania, Girolamo, 95041 Caltagirone, Catania (IT); Amenta, Giovanni, 96013 Carlentini, Siracusa (IT); Galizia, Giovanni, 95032 Belpasso Catania (IT)
(74) Representative: Pulieri, Gianluca Antonio

(57) **Abstract**

The invention relates to a software application which offers a method for controlling the remote terminals of a satellite network by a network supervision centre. The control method uses a connection set up on data channels switched to a low bit rate dynamically activated between the network supervision centre and the terminals to be monitored.

The main tasks of the software application are those of setting up, periodically, a point-point connection with the satellite terminals to acquire status and detailed information on the main components of the station, to send configuration commands, or to set up TCP-IP point -point connections (again via switched channels) between the network supervision centre and the satellite terminals.

## Description

The present invention relates to a satellite terminal control method by a supervision centre, and a satellite network using such control method.

Currently, it is known that most of the current satellite network supervision systems use a dedicated network to control the remote terminals. Such network therefore manages special, dedicated channels which are used to exchange information with the remote terminals.

As well as the intrinsic complexity of such network architecture, a supervision network of this type uses resources on an exclusive basis, permanently subtracting them from those destined for traffic and thus reducing the transmission capacity of the terminals, especially those of reduced capacity. Furthermore, these networks require the presence of a WAN or LAN network to enable interaction between the control centre of the satellite network and the control systems of the remote terminals through client-server type applications using the TCP/IP protocol.

The object of the present invention is to provide a satellite terminal control method which makes it possible to overcome (at least partially) the drawbacks complained of above in relation to the prior art.

Such object is achieved by a control method according to claim 1 and with a network using such method according to claim 14.

Further characteristics and advantages of the control method and of the network according to the present invention will be evident from the description given below of its preferred embodiments, made by way of an indicative and nonlimiting examples, with reference to the attached figures, wherein:

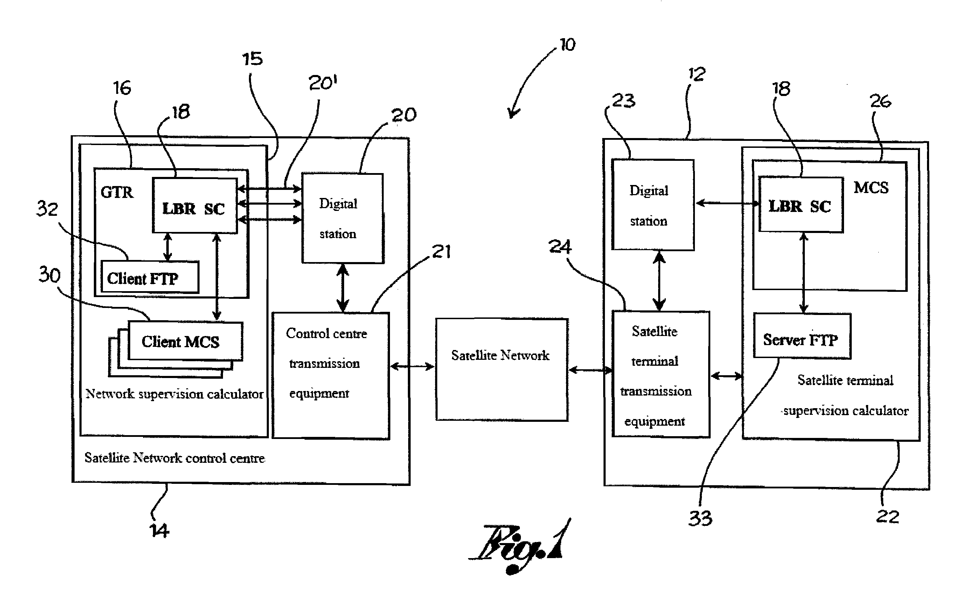

- figure 1 is a block diagram of a satellite network, the supervision centre of which uses the control method which the present invention relates to;

- figure 2 shows an example of a network according to one embodiment;

- figure 3 is a diagram of the states of the polling activity of the remote terminals (interrogation of the remote terminals by the supervision centre); and

- figure 4 shows a sequence diagram of a protocol used to manage the configuration messages of the remote terminals.

A satellite network 10 comprises satellite terminals 12 and a supervision centre 14 able to control said terminals. The supervision centre, in turn, comprises a supervision network calculator 15, a digital station 20 communicating with the supervision calculator 15, and transmission equipment 21 for the transmission/receipt of signals to and from the remote terminals.

The supervision calculator 15 includes a remote terminal management unit 16 (hereinafter called RTM for brevity's sake) which interacts with each of the network terminals.

A remote satellite terminal 12 comprises a supervision calculator 22 of the satellite terminal, a digital station 23 communicating with said calculator, and transmission equipment 24 for the transmission/receipt of signals to and from the network control centre 14.

The supervision calculator 22 of the satellite terminal 12 comprises a monitoring and control unit 26 of the remote terminal (hereinafter called MCS (Monitor and Control System) for brevity's sake).

The present invention relates to a control method of the satellite terminals implemented by a software application 18 (hereinafter also called LBR_SC) to be installed on the remote terminal management system 16 of the supervision centre and on the monitoring and control units 26 of the remote satellite terminals.

According to a general embodiment, the control method comprises the following steps:

-dynamic activation of a connection on data channels switched to a low bit rate, between the supervision centre and the terminals to be controlled,

-use of such switched data channels to set up a point-to-point connection between the network supervision centre and the satellite terminals:

- to acquire information on terminal status,

- to send the terminals configuration commands,

- to create a communication channel to exchange data between the supervision centre and the satellite terminals.

By connection at low bit rate, a connection with a bit rate under 56,000 bit/sec is meant. According to one embodiment, the supervision centre uses channels with a bit rate of 4800 bit/sec.

In order to be able to make various types of connection, the management software 18 uses a number of serial ports of the supervision centre computer; the aforesaid ports are connected by the same number of data channels 20' of the digital station 20.

The digital stations are devices which perform the function of voice/data stations in a communication network.

In the satellite terminals 12, the use of a single data channel 23' of the digital station 23 is foreseen; this channel, appropriately configured, is connected to one of the serial ports of the supervision computer 22 of the terminal.

In each of the satellite terminals of the network, one of the serial ports of the supervision computer 22 is controlled by a software module of the local supervision system which converses with the control software 18.

The serial ports of the network supervision centre are used to channel the various types of connection implemented by the control software according to the invention, and specifically:

- one or more ports are used for the connection by means of which the terminals are interrogated to acquire information on their status (polling activity);

- one port is dedicated to the connection used to send the terminals configuration commands;

-one port is dedicated to the serial connection for data exchange between the supervision centre and the satellite terminals.

According to a preferred embodiment, the data exchange is based on TCP-IP protocol and is used to:

- set up a client-server type dialogue between the supervision centre, which acts as the client, and the terminal to be controlled, which acts as the server, and/or

- set up an FTP ( file transfer protocol) session.

In other words, a TCP-IP channel is set up to create a dialogue between the client 30 of the supervision calculator 15 (client MCS, (installed in the network supervision centre) and the server 31 of the MCS system 22 operating in the terminal to be controlled).

Activation of the channel for interrogating the satellite terminals is requested from the control software 18, for example by other RTM (remote terminal manager) modules to periodically interrogate a remote terminal (poll) and acquire the status of its components from it.

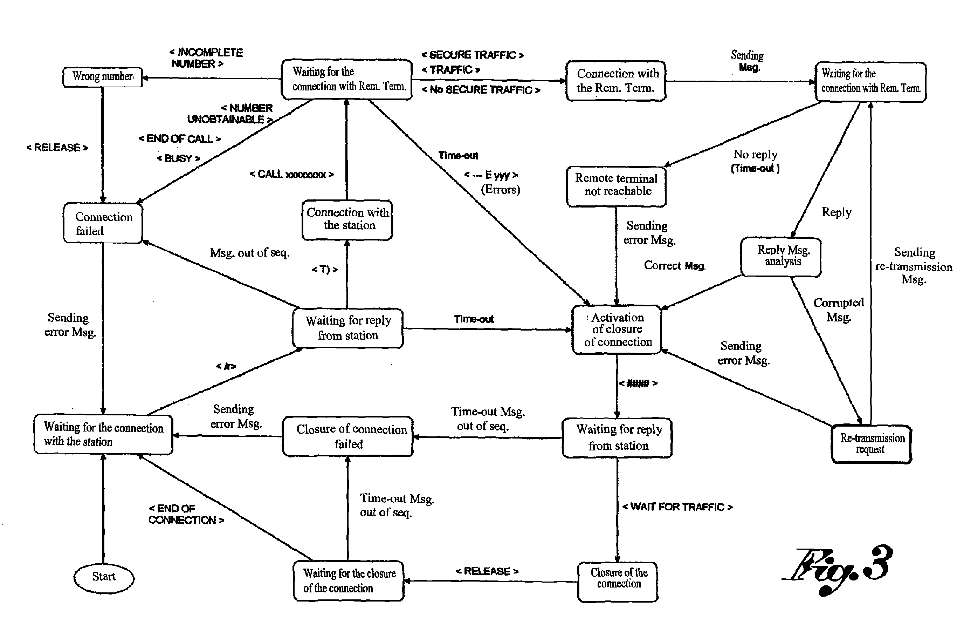

As shown in figure 3, such polling activity comprises the operations of :

- line activation,

- sending the information request,

- acquiring the data from the terminal, and

- closing the connection.

All these operations must be performed at the maximum speed, given that interrogation of the terminals is a periodic and continuous activity.

To perform all the operations listed above a suitable proprietor protocol has been implemented which supervises the dialogue between the two ends of the connection (RTM of the supervision centre and MCS of the remote terminal) and which is based on an exchange of messages according to the following procedure:

- division of the message sent to the terminal into configurable packets of suitable size,

- encapsulation of the packets into a frame (sequence of characters structured with a header string, control fields, data part, data integrity verification fields, trailer string),

- stuffing of the frame (technique eliminating any ambiguities deriving from the use of specific characters or sequences used in the formatting of the frame, from the string composing the said frame).

- calculation of the checksum (a control field of the frame, the value of which depends on the characters composing the remaining part of the said frame; this operation is performed by the transmitter just before despatching the frame on the transmission channel and repeated by the receiver upon conclusion of receipt of the frame; a comparison of the two values makes it possible to verify the integrity of the characters received)

- compression of the frame.

In reception the dual operations which reconstruct the original message and deal with requesting retransmission of the lost or corrupted packets are performed.

The activation of the channel for sending configuration commands to the terminals is requested from the control software, for example by other RTM modules, to send configuration messages to the MCS system of the remote terminal.

The activity in question requests the other RTM components to confirm successful delivery of the message and its acceptance by the MCS terminal (two face commit).

Such activity also requires the presence of messages of considerable length.

To meet the requirements listed above an appropriate proprietor protocol has been implemented which supervises:

- the connection management phases (with algorithms the same as those described above for the polling activity),

- despatch and receipt of the configuration messages and relative responses (using the same techniques for processing the messages as those described above for polling), and

- synchronisation of the delivery of the messages to the various software components of the network supervision centre and local control of the terminal (RTM and MCS).

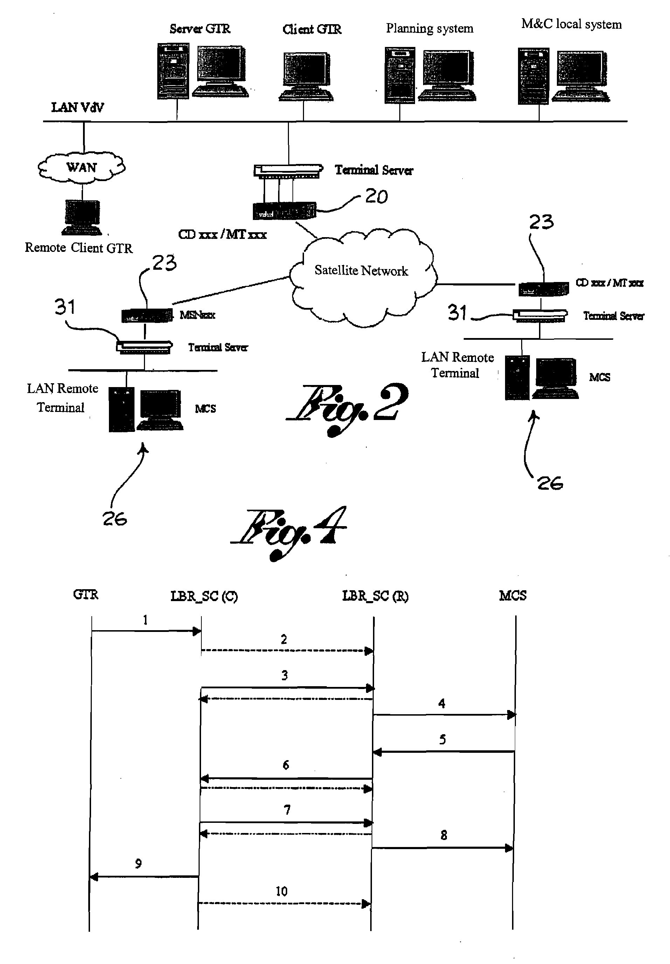

Figure 4 shows the sequence diagram of the protocol used to manage the configuration messages.

The activation of the TCP-IP connection on the switched serial line is requested from the network control software 18 to enable the remote control of the local control centre of a remote terminal (in other words acquire control of a remote terminal via the supervision centre) by activating (on the computer of the supervision centre) the client component of the MCS (control system of the remote terminal) or activating an FTP session 32,33 and thus enabling an exchange of data between the supervision centre and the satellite terminals.

In both cases the applications activated in the RTM constitute the client side of the connection.

The activities which the control software performs to create the connection are:

- activation of the switched connection,

- despatch of the TCP connection activation request to the remote monitoring and control system 22,

- closing of the switched connection,

- freeing up of the remote control serial port or FTP,

- activation of the PPP (Point to Point) and RAS (Remote Access Service) services (client side) on the serial port freed up,

- activation of a watchdog system which controls the state of the connection.

At this point the TCP channel is ready to be used by the appropriate RTM applications.

On closing the connection, dual operations are performed, which:

- disactivate the RAS service (with consequent freeing up of the serial port),

- re-acquire control of the serial port,

- free up the connection,

- re-establish optimal conditions for the poll of the terminal.

Similar activities are performed if interruption of the TCP connection is detected.

With reference to figure 4, in which LBR_SC (C) and LBR_SC (R) have been indicated as the software control applications installed in the network supervision centre and in a remote terminal, respectively, the procedural steps provided are as follows:

1. receipt of the message by LBR_SC (C) and congruence controls with the network status;

2. setting up of the switched serial connection (on command line) with the relevant remote terminal;

3. despatch of the command (on the connection previously set up) to the remote kernel of the terminal;

4. despatch of the command from LBR_SC ( R ) to the MCS of the terminal;

5.confirmation response, from MCS to LBR_SC (R) of receipt of the command;

6. despatch, from LBR_SC (R) to LBR_SC (C)(on the command line), of the response received from MCS;

7. despatch from LBR_SC (C) to LBR_SC (R) of the message of successful receipt of response;

8. despatch from LBR_SC (R) to MCS of receipt notification;

9. despatch from LBR_SC (C) to RTM of the message of response received by MCS,

10. closing of the command line.

In figure 4 the arrows with a continuous line indicate application protocol messages; the arrows with dots and lines indicate line protocol messages; the arrows with dashes indicates Telex protocol messages (between the digital stations).

According to a practical embodiment using the control software according to the invention, satellite terminals scattered within the radius covered by the satellite can be remotely controlled.

Advantageously these terminals may be of various types and equipped with different apparatus.

Each terminal is dynamically affiliated to the network and interrogated by the RTM through the switched serial connections managed by the control software.

The RTM requests setting up of the connection with the terminal, from the software.

The poll process of the terminals is performed in a continuous and automatic manner and can adapt to deal with network congestion (by defining a suitable poll interval) and in its composition by activating various software control applications which competitively serve to paralyse the interrogation activities of the terminals.

Also by means of the control software, the RTM is able to activate sessions for the remote control of the control centre of a terminal of the network.

By means of the TCP-IP point to point connection set up by the control software, the RTM is able to activate an FTP session with the supervision computer of a remote terminal of the network and to transfer from and to it, files of any type and size such as, for example, updated versions of the supervision software of the terminal.

In short, the software application according to the invention enables the supervision centre of the satellite network to periodically interrogate the terminals of the network by setting up a serial connection switched to a low bit rate (for example 4800 bit/sec), such connection using standard data channels. The band used by the system is therefore very low and is not exclusively allocated.

Given the reduced supply of data channels present in many terminals of the network, and in any case in the aim of interfering as little as possible with user communication needs, the control system uses one data channel only on each terminal controlled; this channel is configured (dynamically and automatically) in an optimal manner for being used in the various functions foreseen by the control system (poll, remote control, command etc)

In the network supervision centre rather, a number of data channels (for the purposes of optimising performance and balancing out the use of satellite resources), and minimum of three may be used.

From the network supervision centre it is possible to acquire control of the remote terminal through activation of an IP client.

From the network supervision centre it is possible to send the terminal configuration commands.

Innovatively, the method of control of the satellite terminals according to the invention therefore makes it possible to achieve:

- reduced occupation of the satellite band,

- a high level of flexibility in the configuration of the network,

-transparency of the terminals to be managed,

-flexibility on the connections with the network terminals,

-flexibility of the hardware apparatus used,

-optimisation of the dedicated resources (both hardware and software),

-back-up of information exchange with various protocols (proprietor, TCP/IP,FTP),

-flexibility in the interrogation dynamics of the terminals (interrogation frequency, suspension of interrogation etc.)

The major advantages offered by an M&C satellite system using the control method according to the invention can be summarised as follows:

- absence of a dedicated supervision network,

- possibility of controlling heterogeneous satellite terminals dynamically (without predisposition of a channel dedicated to supervision),

- possibility of interaction with the control centre of the satellite network and the control systems of the remote terminals through client-server type applications using the TCP-IP protocol even in the absence of a WAN or LAN network at the remote terminal,

- parallelization in the interrogation of the terminals,

- flexibility in the frequency of interrogation of the terminals.

A person skilled in the art may make modifications, adaptations and substitutions of elements with others functionally equivalent, to the control method described above so as to satisfy contingent requirements, all moreover contained within the scope of protection as defined by the appended claims. Each of the characteristics described as belonging to a possible embodiment may be realised independently of the other embodiments described.

## Claims

1. Method of control of satellite terminals by a supervision centre of a satellite network, comprising the steps of:
- dynamically activating a connection on data channels switched to a low bit rate between the supervision centre and the terminals to be controlled,
- using such switched data channels to set up a point-to-point connection between the supervision centre of the network and the satellite terminals to:
acquire information on the state of the terminals,
send the terminals configuration commands,
create a communication channel to exchange data between the supervision centre and the satellite terminals.

2. Method according to claim 1, in which the acquisition of information on the state of the terminals occurs periodically at pre-set intervals.

3. Method according to claim 1 or 2, wherein on each of the satellite terminals only one data channel is physically engaged.

4. Method according to any of the previous claims, wherein the network supervision centre uses a number of data channels.

5. Method according to any of the previous claims, wherein the exchange of data between the supervision centre and the satellite terminals is based on TCP-IP protocol.

6. Method according to claim 5, wherein said TCP-IP protocol is used to:
- set up a client-server type dialogue between the supervision centre, which acts as the client, and the terminal to be controlled, which acts as the server,
- set up an FTP (file transfer protocol)session.

7. Method according to any of the previous claims, wherein the supervision centre, in order to effect various types of connection, uses a number of serial ports connected to the same number of data channels, at least one connection port through which the terminals are interrogated so as to acquire information, one connection port used to send the terminal configuration commands, and one port dedicated to serial connection for data exchange.

8. Method according to any of the previous claims, wherein the phase of acquiring information on the status of a satellite terminal comprises the steps of:
- line activation of the data line,
- despatch of the information request from the supervision centre to the terminal,
- acquiring the data from the terminal, and
- closing the connection.

9. Method according to claim 8, wherein said phase of information acquisition from a terminal is implemented by a communication protocol based on an exchange of messages comprising, on the terminal side, the operations of:
- division of the message into packets of selectable size,
- encapsulation of the packets into a frame
- stuffing of the frames
- calculation of the checksum,
- compression of the frames,
and, on the supervision centre side, dual operations which reconstruct the original message and deal with requesting retransmission of the lost or corrupted packets.

10. Method according to any of the previous claims, wherein the phase of configuring the terminals provides confirmation of successful delivery of the configuration message and its acceptance by the terminal.

11. Method according to claim 10, wherein the configuration phase of a terminal is managed by a communication protocol able to implement the phases of:
- management of the connection with a terminal,
- despatch and receipt of configuration messages and relative responses,
- synchronisation of delivery of the messages between the various components of the supervision centre and the local terminal controller.

12. Method according to claim 6, wherein the setting up of a connection based on TCP-IP protocol on the switched serial line comprises the phases of :
- activation of the switched connection;
- despatch of the TCP connection activation request to the satellite terminal;
- closing of the switched connection;
- freeing of the remote control serial port or FTP;
- activation of the PPP (Point to Point) and RAS (Remote Access Service) services (client side) on the freed up serial port;
- activation of a system which controls the state of the connection.

13. Method according to claim 12, wherein on closing the connection dual operations are performed which
- disactivate the RAS service, with consequent freeing up of the serial port;
- reacquire control of the serial port;
- free up the connection;
- re-establish optimal conditions for information acquisition activities on the status of the terminal.

14. Satellite network comprising at least one network supervision centre and at least one satellite terminal controlled by said supervision centre, **characterised by** the fact that the supervision centre and each remote terminal are configured to perform a control method according to any of the previous claims.

15. Satellite network according to claim 14, wherein the supervision centre has a calculator equipped with a number of serial ports to effect the various types of connection, each connected to a respective data channel of the digital stations.

16. Informatic product directly loadable in the internal memory of a processor and comprising portions of software code able to enact a procedure according to any of the claims 1-13 when the programme is run on a computer.
